# EUROPEAN PATENT APPLICATION

(11) **EP 1 568 656 A2**
(43) Date of publication of application: **31.08.2005**
(21) Application number: 05004027.8
(22) Date of filing: 24.02.2005
(51) Int. Cl.: B81B 3/00, H02N 1/00

(54) **Micro-mechanical electrostatic actuator**

(30) Priority: 27.02.2004 JP 2004054181; 10.09.2004 JP 2004263522
(71) Applicant: SEIKO EPSON CORPORATION, Tokyo 163-0811 (JP)
(72) Inventor: Kihara, Ryuji, Suwa-shi Nagano-ken 392-8502 (JP)
(74) Representative: HOFFMANN EITLE

(57) **Abstract**

This invention is to provide a micro-mechanical electrostatic actuator with a high driving force and a small occupied space and a micro-mechanical electrostatic actuator in which the movable electrode can be easily manufactured. A micro-mechanical electrostatic actuator (100) of the present invention includes a substrate, a movable electrode (102) supported by the substrate so as to be movable in a plane along a surface of the substrate and having a frame-shape and a opening (102a) that penetrates in a vertical direction perpendicular to the plane, drive electrodes (103A) and (103B) provided in the opening of the substrate, a voltage supply applying a voltage between the movable electrode and the drive electrode and a signal output providing an output signal according to displacement of the movable electrode.

## Description

### [Field of the Invention]

The present invention relates to a micro-mechanical electrostatic actuator, more particularly, a micro-mechanical electrostatic actuator which is suitable when a resonant element or a filter element is provided.

### [Description of the Related Art]

With the coming of world-wide advanced information society, an industry of telecommunications and multimedia has been dramatically developing. Cellular phones for personal use widely spread and a new businesses using internet have appeared. Especially, the cellular, which can be called as a leading force in this information age, is not only used as a phone but also used to send or receive large volume data such as high-quality music and a colored motion picture in addition to voice, letters and a still image through a high-speed communication. In order to equip the cellular phone and the like with such advanced functions, "reduction in size and weight" of components and parts is increasingly required due to space limitations. Meanwhile, a case of the cellular phone also has been downsized but it sees limits since there are operational limitations. Hereafter, a demand for a "thinner" case will be increasingly demanded.

As a means to satisfy the above-mentioned various demands, there is Micro Electro Mechanical Systems (MEMS) technology. MEMS is a high value-added component which is made by "micro-machining" based on a fine processing technology of semiconductors. With the MEMS technology, besides a circuit, a micro-structure body, a sensor, an actuator, an energy source and the like can be integrated into a small space. As specific products, a head of a printer, Digital Micro-mirror Device (DMD) and the like have been on the market.

As a structure of an electrostatic actuator, a comb type actuator, in which two electrodes having a comb-shaped structure oppose each other such that teeth of the one comb meshes with teeth of the other comb, is known (for example, see Non-Patent Document 1 below). For example, an electrostatic actuator 10 shown in FIG. 19 includes a fixed part 11a fixed on a substrate, supporting beam members 11b and 11c that are coupled with the fixed part 11a and a supporting part 11 having the beam members 11b and 11c. The electrostatic actuator 10 further includes a movable electrode 12 placed in the middle with the supporting part 11 and a pair of drive electrode (fixed electrode) 13 placed on the either side of the actuator. A comb teeth structure 12c of the movable electrode 12 and a comb teeth structure 13b of the drive electrode 13 oppose each other such that the teeth of the one comb mesh with the teeth of the other comb. The electrostatic actuator 10 is composed to be a resonator and the opposed part of the two electrodes has the comb-shaped structure. In this way, an area where the two electrodes oppose is large and it leads to increase in a driving force. Therefore, there is an advantage that the actuator can be driven by relatively low voltage. There is also another advantage that a liner response can be received since a relationship between displacement and capacitor change is liner.

### [Published Prior Art]

Some prior art relating to the background of the present invention is disclosed in "WILLIAM C. TANG, TU-CUONG, H. NGUYEN and ROGER T. HOWE "Laterally Driven Resonant Microstructures" Sensors and Actuators, 20 (1989) p.25-32". This document is herein referred to as non-patent document 1.

### [Summary of the Invention]

### [Disadvantages/Object of the invention]

However, the above-mentioned comb type electrostatic actuator 10 needs to have a connection part 12a that couples the two comb-shaped structures placed on the either side and a comb supporting part 12b that supports the comb-shaped structures in order to form the comb-shaped structures of the movable electrode 12 all-in-one. When the comb-shaped structure has many teeth in order to enhance the driving force, these connection part 12a and comb supporting part 12b occupy a large space. The connection part 12a and the comb supporting part 12b have nothing to do with the driving force. Therefore, the actuator becomes large because of these parts and this runs counter to downsizing of the actuator.

Furthermore, to form the movable electrode 12, a sacrifice layer made of phosphosilicate glass (PSG), organic resin and the like is formed on a substrate and then the movable electrode 12 is formed. After the movable electrode 12 is formed, it is necessary to remove the sacrifice layer by etching and the like. However, when the connection part 12a and the comb supporting part 12b are formed to occupy a large space, it is difficult to etch the sacrifice layer.
Sometimes the movable electrode 12 cannot be released from the substrate and it leads to a problem of a lower process yield. Moreover, in order to assuredly perform the etching of the sacrifice layer, it is necessary to form an etching opening 12x that is provided in the plural number in the connection part 12a and the comb supporting part 12b. This makes it difficult to design the structure of the actuator.

The present invention has been developed in consideration of the above-mentioned problems, and is intended to provide a micro-mechanical electrostatic actuator with a high driving force and a small occupied space. The present invention also intended to provide a micro-mechanical electrostatic actuator in which the movable electrode can be easily manufactured.

### [Solution of the object]

In consideration of the above-mentioned problems, a micro-mechanical electrostatic actuator of a first aspect of the present invention includes a substrate, a movable electrode supported by the substrate so as to be movable in a plane along a surface of the substrate and having a frame-shape and a opening that penetrates in a vertical direction perpendicular to the plane, a drive electrode provided in the opening of the substrate, a voltage supply applying a voltage between the movable electrode and the drive electrode and a signal output providing an output signal according to displacement of the movable electrode.

According to the first aspect of the present invention, when a voltage is applied between the movable electrode and the drive electrode by the voltage supply, an electrostatic force is generated between an edge of the opening in the movable electrode and the drive electrode provided in the opening. The movable electrode is moved in the plane by the electrostatic force and the output signal is output according to this displacement of the movable electrode. Here, a large area where the electrodes oppose each other and to which the electrostatic force acts is assured and rigidity can also be secured without having a joint structure or a supporting structure because the movable electrode has the frame shape having the opening. Therefore, it is possible to make the occupied area smaller without weakening a drive force. Moreover, a driving voltage can be lowered since the drive force is enhanced. Furthermore, the movable electrode can be easily manufactured since etching of a sacrifice layer can be easily performed though the opening of the movable electrode.

Here, the drive electrode is preferably placed in a position displaced from the center of the opening under the circumstance where the electrostatic force is not working.
In an initial state where the electrostatic force is not working, the electrostatic force generated between the drive electrode and the movable electrode mainly works to the edge of the opening placed in the position displaced from the center of the opening. Therefore, a sufficient drive force can be obtained from the beginning of the driving.

In the micro-mechanical electrostatic actuator, the drive electrode is preferably provided in the plural number and independently placed in the opening. In this way, it is possible to give an electric potential to one drive electrode and give an opposite electric potential to the other drive electrode with reference to a potential of the movable electrode. This makes it possible to enhance the drive force by, for example, acting both of a repulsive electrostatic force and an attractive electrostatic force to the movable electrode at the same time. Furthermore, it is possible to move the movable electrode in more than two different directions according to configuration of the electric potentials given to the drive electrodes when a shape of the opening edge and arrangement of the drive electrodes are accordingly set. For example, when one drive electrode is placed so as to be close to a one side of the opening edge and the other drive electrode is placed so as to be close to the other side (different side from the one side) of the opening edge, the moving direction of the movable electrode can be changed according to a configuration of the electric potential given to the one drive electrode and the other drive electrode. This is possible because a direction of the electrostatic force generated when a voltage is applied between the one drive electrode and the movable electrode is different from a direction of the electrostatic force generated when a voltage is applied between the other drive electrode and the movable electrode.

The micro-mechanical electrostatic actuator preferably further includes another drive electrode placed outside the movable electrode so as to oppose an outer edge of the movable electrode. In this way, the electrostatic force can also be generated between the movable electrode and the other drive electrode placed outside the movable electrode. Therefore, the movable electrode can be more efficiently moved and the drive force can be enhanced.

In the micro-mechanical electrostatic actuator, the opening preferably includes a plurality of openings arranged in the movable electrode. The area where the electrodes oppose and to which the electrostatic force acts can be increased by arranging the plurality of openings and the drive force can be enhanced. Furthermore, since the openings are provided so as to uniformly disperse on the whole movable electrode (by, for example, making the movable electrode to have a lattice structure or a net structure), a balance of the drive force can be secured. In addition, it is possible to shorten a manufacturing time and to improve an accuracy of the structure because the movable electrode can be easily released from the substrate at a time of etching of a sacrifice layer.

In the micro-mechanical electrostatic actuator, the plurality of the openings is preferably vertically and horizontally arranged in a matrix in the movable electrode. In this way, compactness of the actuator can be assured as well as preventing a decrease in rigidity of the movable electrode. Furthermore, it is possible to further enhance the drive force since an arrange density of the openings can be made to be large.

A micro-mechanical electrostatic actuator of a second aspect of the present invention includes a substrate, a movable electrode supported by the substrate so as to be movable in a plane along a surface of the substrate and having a frame-shape and a opening that penetrates in a vertical direction perpendicular to the plane and drive electrodes independently arranged in the opening of the substrate such that a moving direction of the movable electrode is changeable according to electric potentials given to the drive electrodes.

According to the second aspect of the present invention, a large area where the electrodes oppose each other and to which the electrostatic force acts is assured and rigidity can also be secured without having a joint structure or a supporting structure because the movable electrode has the frame shape having the opening. Therefore, it is possible to make the occupied area smaller without weakening a drive force. Moreover, a driving voltage can be lowered since the drive force is enhanced. Furthermore, the movable electrode can be easily manufactured since etching of a sacrifice layer can be easily performed though the opening of the movable electrode. In addition, it is possible to move the movable electrode in different directions in the plane since the drive electrodes independently arranged in the opening of the substrate such that a moving direction of the movable electrode is changeable according to electric potentials given to the drive electrodes. For example, it is possible to move the movable electrode more intricately. When the electrostatic actuator is used as an oscillator or a filter element, it can be moved in different vibration modes. In this way, degrees of freedom in moving patterns can be increased.

It is preferred that one drive electrode is placed so as to be close to an opening edge that oppose to one side in the plane and the other drive electrode is placed so as to be close to an opening edge that oppose to the other side (different side from the one side) in the plane. When the drive electrodes are configured in the above-described way, the moving direction of the movable electrode can be changed according to a configuration of the electric potential given to the one drive electrode and the other drive electrode. This is possible because a direction of the electrostatic force generated when a voltage is applied between the one drive electrode and the movable electrode is different from a direction of the electrostatic force generated when a voltage is applied between the other drive electrode and the movable electrode.

In the micro-mechanical electrostatic actuator, the opening preferably includes a plurality of openings arranged in the movable electrode. Especially, the plurality of the openings is preferably vertically and horizontally arranged in a matrix in the movable electrode.

A micro-mechanical electrostatic actuator of a third aspect of the present invention includes a substrate, a movable electrode supported by the substrate so as to be movable in a plane along a surface of the substrate and having a frame-shape and a plurality of openings arranged along the plane so as to be evenly dispersed and a drive electrode provided in each opening.

According to the third aspect of the present invention, a large area where the electrodes oppose each other and to which the electrostatic force acts is assured and rigidity can also be secured without having a joint structure or a supporting structure because the movable electrode has the frame shape having the opening. Therefore, it is possible to make the occupied area smaller without weakening a drive force. Moreover, a driving voltage can be lowered since the drive force is enhanced. Furthermore, the movable electrode can be easily manufactured since etching of a sacrifice layer can be easily performed though the opening of the movable electrode. Particularly, the movable electrode can be easily manufactured since the openings are provided so as to uniformly disperse. Furthermore, a balance of the drive force can be secured with the plurality of openings arranged so as to evenly disperse in the movable electrode.

In the micro-mechanical electrostatic actuator, the plurality of the openings is preferably vertically and horizontally arranged in a matrix in the movable electrode. Also, it is preferred that the drive electrode is provided in the plural number and independently placed in the opening.

### [Advantageous effects of the invention]

According to the present invention, there are advantageous effects such as improvement of the drive force, lowering the drive voltage, decrease in the occupied area and simplification of the manufacturing process.
Further embodiments and improvement of the invention may be taken from the dependent claims. Hereinafter, the invention will be described with reference to its advantageous embodiments in conjunction with the attached drawings.
However, the invention can also comprises further embodiments which result from combinations of features which have been separately described in the claims and the description or the drawings.

### [Brief Description of the Drawings]

**FIG. 1** is a plan view showing a planar structure of a micro-mechanical electrostatic actuator of a first embodiment according to the present invention;
**FIGs. 2a and 2b** are longitudinal sectional views showing sectional structures of the micro-mechanical electrostatic actuator of the first embodiment;
**FIG. 3** is a plan view showing a planar structure of a micro-mechanical electrostatic actuator of a second embodiment according to the present invention;
**FIG. 4a** is an enlarged plan view showing a part of the micro-mechanical electrostatic actuator of the first embodiment; and
**FIGs. 4b and 4c** are enlarged plan views showing a drive status of a movable electrode;
**FIG. 5a** is an enlarged plan view showing a part of a micro-mechanical electrostatic actuator of a modification example of the first embodiment; and
**FIGs. 5b and** 5c are enlarged plan views showing a drive status of the movable electrode;
**FIG. 6** is a plan view showing a planar structure of a micro-mechanical electrostatic actuator of a third embodiment according to the present invention;
**FIG. 7** is a plan view showing a planar structure of a micro-mechanical electrostatic actuator of a fourth embodiment according to the present invention;
**FIG. 8a** is a perspective view of an electrostatic actuator of a fifth embodiment showing its structure, FIG. 8b is an enlarged plan view showing a part of a micro-mechanical electrostatic actuator of a modification example of the fifth embodiment; and
**FIGs. 8c to 8f** are enlarged plan views showing a drive status of the movable electrode;
**FIG. 9** is a longitudinal sectional view along the line IX-IX in FIG. 7 showing a sectional structure of the fifth embodiment;
**FIG. 10** is a plan layout view showing a wiring structure of the fourth embodiment;
**FIG. 11** is a longitudinal sectional view along the line XI-XI in FIG. 10 showing a sectional structure of the wiring structure of the fourth embodiment;
**FIG. 12** is a longitudinal sectional view along the line XII-XII in FIG. 10 showing a sectional structure of the wiring structure of the fifth embodiment;
**FIG. 13** is a plan view showing a planar structure of a micro-mechanical electrostatic actuator of a sixth embodiment according to the present invention;
**FIG. 14a** is a plan view showing a planar structure of a micro-mechanical electrostatic actuator of a seventh embodiment according to the present invention; and
**FIG. 14b** is a longitudinal sectional view along the line B-B in FIG. 14a showing a sectional structure;
**FIG. 15** is a plan view of an electrostatic actuator of a comparative example showing its plan structure model;
**FIG. 16** is a plan view of an electrostatic actuator of a practical example according to the present invention showing its plan structure model;
**FIG. 17** is a configuration block diagram showing an application example of a voltage application means and a signal output means;
**FIG. 18** is a configuration block diagram showing another application example of the voltage application means and the signal output means; and

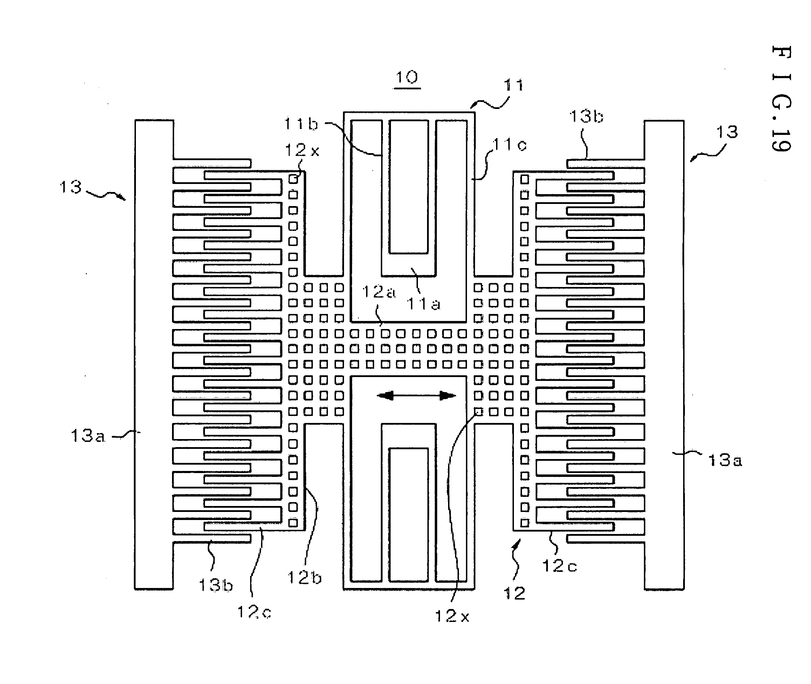

**FIG. 19** is a plan view of an electrostatic actuator having a conventional comb shaped structure.

### [Description of the Preferred Embodiments]

Embodiments of the present invention will now be described in detail with reference to the accompanying drawings. In the following plan views of the drawings showing embodiments, the contour of a substrate that composes a base will be omitted. In the following sectional views, a scale size of the substrate is adjusted so as to make the substrate recognizable. However, in a practical sense, a planar shape and a planar size of the substrate can be freely set. In the figures, a scale size, especially thickness, may be different from that of the real parts and components for illustration purpose.

### (First Embodiment)

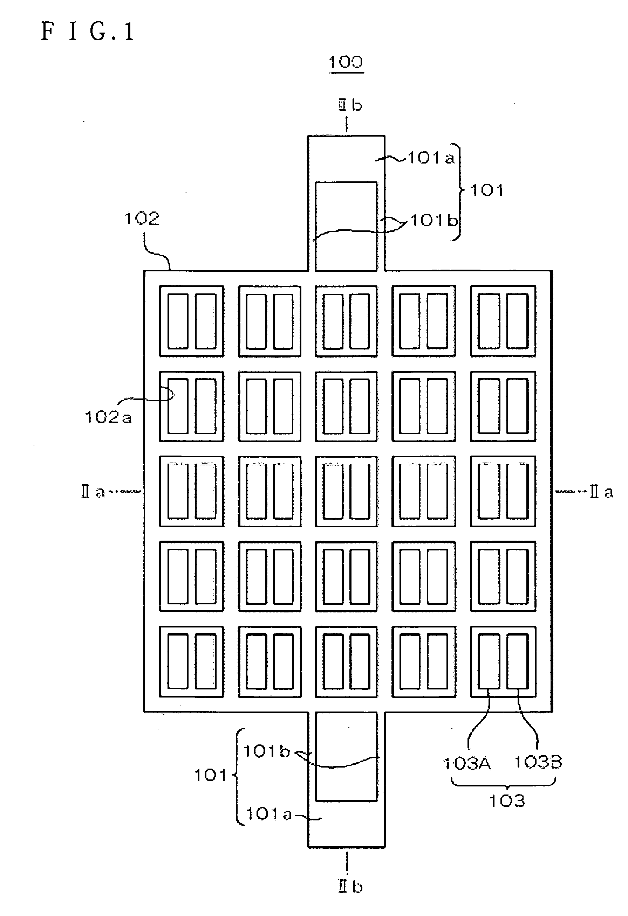

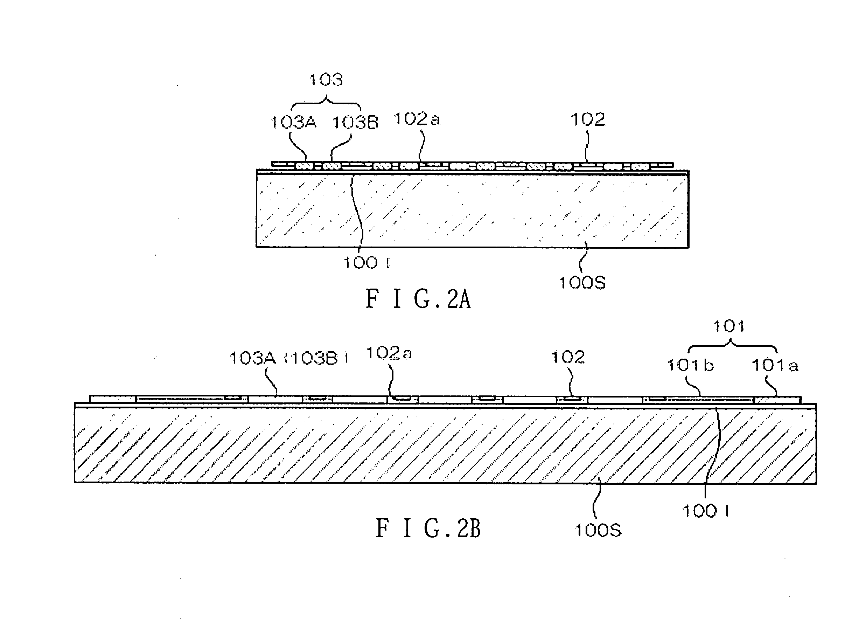

FIG. 1 is a plan view showing a planar structure of a micro-mechanical electrostatic actuator 100 of a first embodiment according to the present invention. FIG. 2a is a longitudinal sectional view of the actuator along the line IIa-IIa in FIG. 1 schematically showing a sectional structure. FIG. 2b is another longitudinal sectional view of the actuator along the line IIb-IIb in FIG. 1 schematically showing the sectional structure. The electrostatic actuator 100 has a supporting part 101, a movable electrode 102 and a drive electrode 103. The actuator is formed on a substrate 100S shown in FIG. 2 by a thin film forming process. For example, when a silicon substrate is used as the substrate 100S, an insulating layer 100I is formed on the silicon substrate and then the above-mentioned supporting part 101, the movable electrode 102 and the drive electrode 103 are formed on the insulating layer 100I. The supporting part 101, the movable electrode 102 and the drive electrode 103 are formed in a thin film form by using semiconductor having a certain carrier concentration such as polysilicon or metal such as aluminum. When the substrate 100S is not an insulating substrate, for example, the substrate is a conductive semiconductor substrate or a conductive substrate, the insulating layer 100I made of SiO₂ and the like is formed on the surface of the substrate 100S. The above-mentioned supporting part 101, the movable electrode 102 and the drive electrode 103 are then formed on the insulating layer 100I. When the substrate 100S is the insulating substrate, the insulating layer 100I is not necessary to be formed. This electrostatic actuator 100 is a minute electrostatic actuator formed by using the MEMS technology.

The supporting part 101 has a fixed part 101a that is fixed on the base face (the surface of the substrate or the insulating layer) and a supporting beam member 101b that is provided so as to have distance from the base face and coupled with the movable electrode 102. In the example shown in the figure, the supporting part 101 has a pair of supporting beam members 101b. The above-mentioned supporting part 101 is provided on either side of the movable electrode 102 and these supporting parts hold the both ends of the movable electrode 102.

The movable electrode 102 is formed such that the whole body is seceded from the base face. The movable electrode 102 can be moved in a horizontal direction (the right-and-left direction in the figure) by deforming the supporting beam member 101b in the supporting part 101. An opening 102a that penetrates in a vertical direction (a direction perpendicular to the page of FIG. 1) is provided in the movable electrode 102. The movable electrode 102 has a frame shape because the opening 102a is formed. In the example shown in the figure, the opening 102a is provided in the plural number in the movable electrode 102 and they are vertically and horizontally arranged in a matrix. In other words, openings 102a are provided so as to uniformly disperse on the whole movable electrode 102. In the example shown in the figure, the opening 102a is a rectangular shape. The horizontal direction and the vertical direction are relative expressions and they do not change depending on an installation position of the electrostatic actuator. The frame shape only means a shape having an opening that is completely enclosed and a planar shape of the movable electrode may be a window frame shape or a meshed shape.

The drive electrode 103 is provided within each opening 102a of the movable electrode 102. As the drive electrode 103, a first drive electrode 103A and a second drive electrode 103B are separately provided in each opening 102a. To provide the electrodes separately means that a different electric potential can be given to each electrode.

When an electrostatic force does not work between the movable electrode 102 and the drive electrode 103 (a state shown in FIG. 1), the first drive electrode 103A is placed in a position displaced from the center of the opening 102a in a predetermined direction (the left side in the figure), while the second drive electrode 103B is placed in a position displaced from the center of the opening 102a in a opposite direction to the predetermined direction (the right side in the figure). In other words, the first drive electrode 103A and the second drive electrode 103B are provided on either side of the center of the opening 102a.

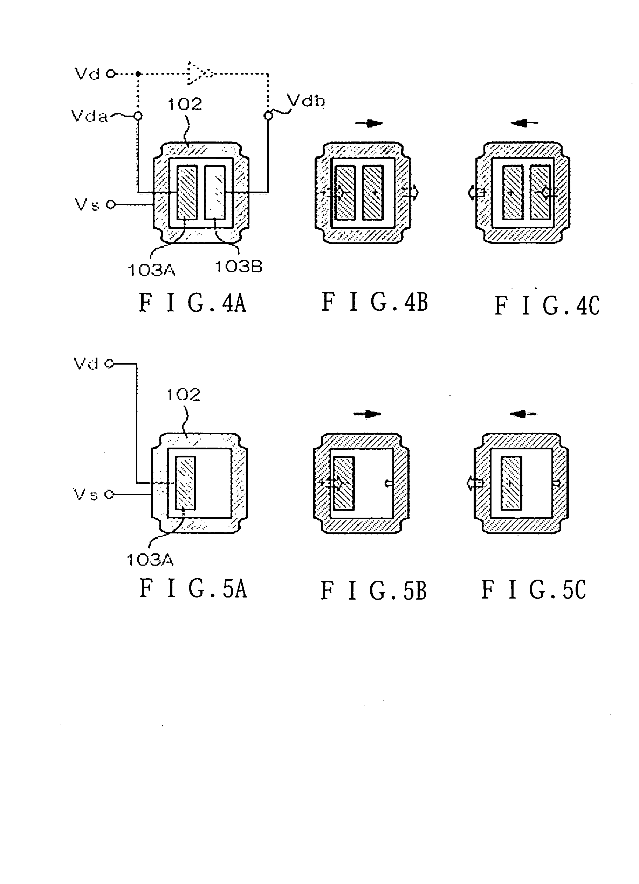

FIGs. 4a through 4c show a part of the above-mentioned movable electrode 102 and the above-mentioned drive electrode 103 in order to explain a relationship among these electrodes. As shown in FIG. 4a, an electric potential Vs is applied to the movable electrode 102, an electric potential Vda is applied to the first drive electrode 103A and an electric potential Vdb is applied to the second drive electrode 103B. Here, the electric potential Vda has an opposite polarity to that of the electric potential Vdb with reference to the electric potential Vs. In this case, an electrostatic force between the movable electrode 102 and the first drive electrode 103A and an electrostatic force between the movable electrode 102 a and the second drive electrode 103B work towards the same direction as shown in FIGs. 4b and 4c. This means that the movable electrode 102 is subject to a strong driving force. In other words, when a repulsive electrostatic force works between the movable electrode 102 and the first drive electrode 103A, an attractive electrostatic force works between the movable electrode 102 and the second drive electrode 103B. On the contrary, when the attractive electrostatic force works between the movable electrode 102 and the first drive electrode 103A, the repulsive electrostatic force works between the movable electrode 102 and the second drive electrode 103B. In this case, the electric potentials with the opposite polarity may be applied to the first drive electrode 103A and the second drive electrode 103B by providing a polarity inverting circuit as illustrated with a dashed line in FIG. 4a. An electric potential Vd is supplied to the one end of the polarity inverting circuit and the electric potential Vs is supplied to the other end as the reference.

Furthermore, in the above-described embodiment, only one of the first drive electrode 103A or the second drive electrode 103B may be driven. For example, the electric potential Vd is supplied to the first drive electrode 103A and the electric potential Vs is supplied to the movable electrode 102 as shown in FIG. 5a, and then the driving force is given to the movable electrode 102 as shown in FIGs. 5a and 5b. In this case, only the first drive electrode 103A may be formed as the drive electrode 103.

According to this embodiment, an area where the electrodes oppose each other to generate the electrostatic force can be increased by placing the drive electrode 103 the opening 102a formed in the frame-shaped movable electrode 102. In addition, it is not necessary to provide a mere supporting member and most part of the movable electrode 102 becomes an effective drive part. Therefore, the large driving force can be obtained without increasing the occupied area.
Furthermore, there is an advantage that the sacrifice layer can be removed without any difficulty since the opening 102a for driving is formed in the movable electrode 102 itself. Particularly, a time of the manufacturing process can be shortened and a precision of the shape of the electrode structure can be improved because the openings 102a are provided so as to evenly disperse in the whole movable electrode 102.

When the electrostatic actuator of the above-described embodiment is manufactured, firstly, the fixed part 101a in the supporting part 101 and the drive electrode 103 are formed on the base such as the substrate 100S and the insulating layer 100I by a film forming process and a patterning process. The film forming process is performed by sputtering, Chemical Vapor Deposition (CVD) and the like and the patterning process is performed by photolithography and the like. Secondly, the sacrifice layer (not shown in the figures) made of phosphosilicate glass (PSG), organic resin and the like is formed on an area other than where the fixed part 101a and the drive electrode 103 are formed. Thirdly, the supporting beam member 101b and the movable electrode 102 are formed on the sacrifice layer by the above-mentioned film forming process and the patterning process. Finally, the sacrifice layer is removed by etching and the like and the supporting beam member 101b and the movable electrode 102 are formed so as to be separated (released) from the surface of a substrate 300S.

### (Second Embodiment)

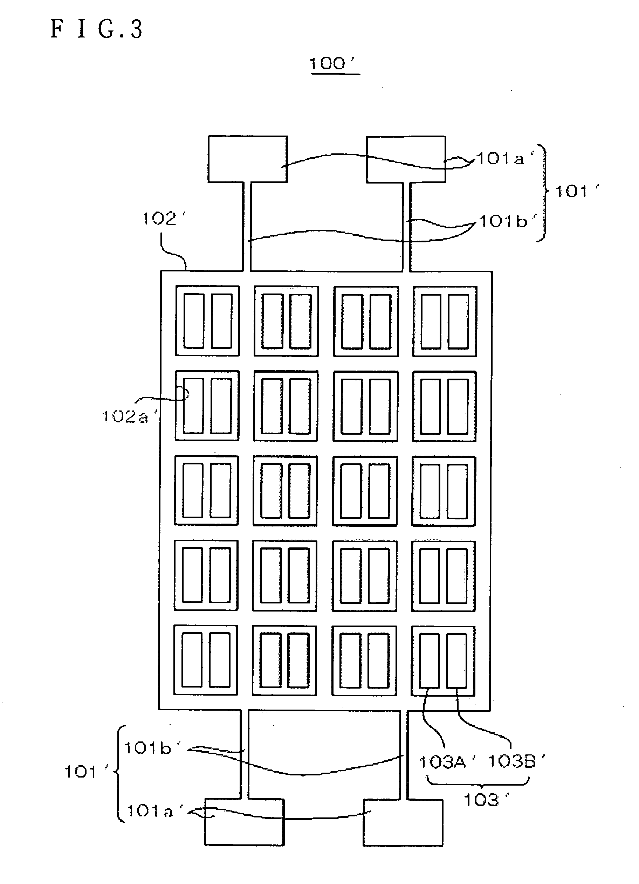

A micro-mechanical electrostatic actuator 100' of a second embodiment according to the present invention will be described in detail with reference to FIG. 3. The micro-mechanical electrostatic actuator 100' has a supporting part 101', a movable electrode 102' and a drive electrode 103' formed on the same type of substrate as one in the first embodiment. Here, the movable electrode 102' and the drive electrode 103' have basically the same structure as that of the first embodiment. An opening 102a' is provided in the plural number in the movable electrode 102' and they are vertically and horizontally arranged in a matrix. In other words, openings 102a' are provided so as to uniformly disperse throughout the movable electrode 102'. Moreover, a first drive electrode 103A' and a second drive electrode 103B' are separately provided in each opening 102a'.

In this embodiment, a supporting part 101' also has a fixed part 101a' and a supporting beam member 101b' like the one in the first embodiment. However, a pair of fixed parts 101a' and a pair of supporting beam members 101b' are provided on either side of the movable electrode 102', which is different from the first embodiment. The fixed parts 101a' are separately provided and the supporting beam members 101b' are also separately provided. In other words, a pair of the supporting beam members 101b' is respectively coupled to diagonal sides of the movable electrode 102' with a certain space therebetween. These supporting beam members 101b' are separately fixed on the substrate with the respective fixed parts 101a'.

When the supporting part 101' is configured in the above-described way, the supporting part 101' can be provided in the plural number at desired positions of the both sides of the movable electrode 102'. Therefore, the movable electrode 102' can be strongly held. Accordingly, the movable electrode 102' can be supported in more stable posture and a moving direction of the movable electrode 102' (the horizontal direction in FIG. 3) can be more precisely set.
In this embodiment, two supporting parts 101' are provided on both sides of the movable electrode 102'. However, for example, three supporting parts 101' may be formed on both sides of the movable electrode 102' as long as the supporting part 101' is provided in the plural number.

### (Third Embodiment)

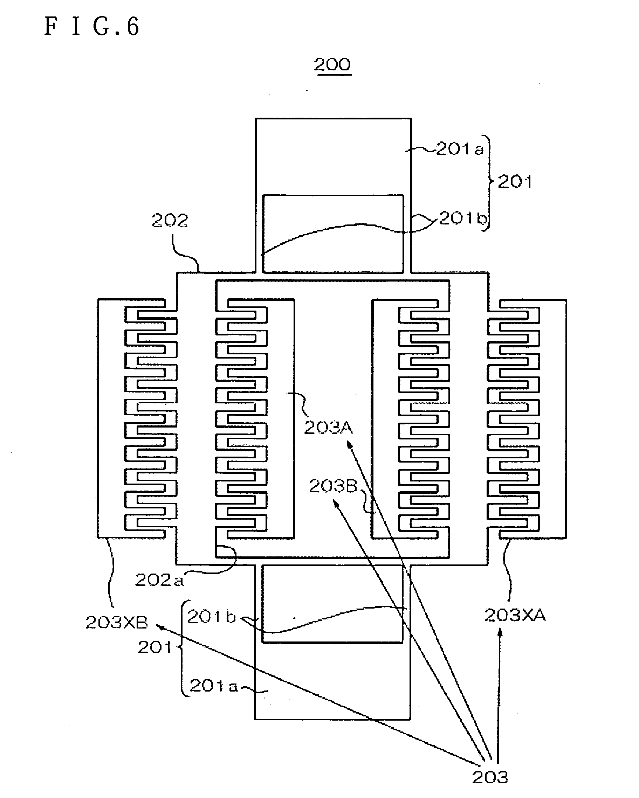

A micro-mechanical electrostatic actuator 200 of a second embodiment according to the present invention will be described in detail with reference to FIG. 6. The micro-mechanical electrostatic actuator 200 has a supporting part 201, a movable electrode 202 and a drive electrode 203 formed on the same type base as the one in the first embodiment.
The supporting part 201 has a fixed part 201a and a supporting beam member 201b like the one of the first embodiment dose.

The movable electrode 202 has an opening 202a, which is the same as the first embodiment. The movable electrode 202 is formed so as to be separated from the base face and be movable in the horizontal direction (the right-and-left direction in the figure), which is also the same as the first embodiment. The movable electrode 202 has only one opening 202a, which is different from the first embodiment. A first drive electrode 203A and a second drive electrode 203B are provided in the opening 202a, which is the same as the first embodiment. In addition to these drive electrodes, in this embodiment, a third drive electrode 203XA and a fourth drive electrode 203XB are provided outside the movable electrode 202, which is different from the first embodiment.

In this embodiment, when the repulsive electrostatic force works between the movable electrode 202 and the first drive electrode 203A and between the movable electrode 202 and the third drive electrode 203XA, the attractive electrostatic force works between the movable electrode 202 and the second drive electrode 203B and between the movable electrode 202 and the fourth drive electrode 203XB. On the contrary, when the attractive electrostatic force works between the movable electrode 202 and the first drive electrode 203A and between the movable electrode 202 and the third drive electrode 203XA, the repulsive electrostatic force works between the movable electrode 202 and the second drive electrode 203B and between the movable electrode 202 and the fourth drive electrode 203XB. In this way, a large driving force can be provided by these four drive electrodes 203.

When the movable electrode 202 has the only one opening 202a like this embodiment or when fewer openings are formed and the movable electrode 202 occupies the same area at the same time, the area where the electrodes oppose each other to generate the electrostatic force becomes smaller that that of the first embodiment. This can be a disadvantage regarding the driving force. In order to deal with this disadvantage, besides the drive electrodes in the opening 202a of the movable electrode 202, the drive electrode 203XA and the fourth drive electrode 203XB are provided outside the he movable electrode 202 in this embodiment. In this way, the driving force can be enhanced without largely increasing the occupied area.

Furthermore, each opposed face of the movable electrode 202 and the drive electrodes 203 (203A, 203B, 203XA and 203XB) has the comb-shaped structure in this embodiment. The movable electrode 202 and each drive electrode 203 oppose each other such that the teeth of the one comb mesh with the teeth of the other comb. Therefore, the area where the two electrodes oppose is increased and this can further enhance the driving force.

The structure of the micro-mechanical electrostatic actuator in this embodiment seems to have the similar structure of the conventional actuator having the comb-shaped structure at first glance. However, it is different in the following respect. The movable electrode 202 has the frame shape with the opening 202a. In this way, an area of a needless supporting structure in the movable electrode 202 except for the drive member can be decreased as well as preventing a decrease in rigidity of the movable electrode 202.
Therefore, the decrease of the occupied area and the improvement of the driving force can be achieved at the same time.

### (Fourth Embodiment)

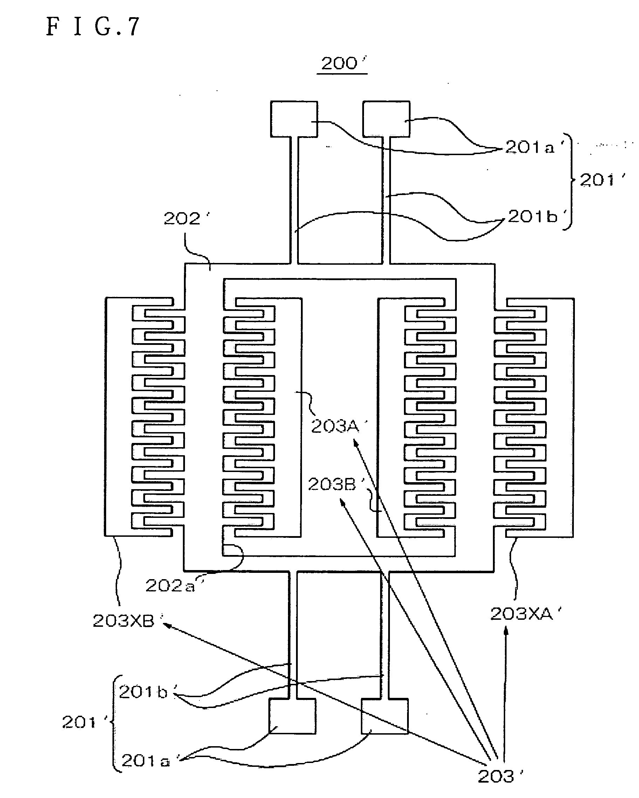

A micro-mechanical electrostatic actuator 200' of a fourth embodiment according to the present invention will be described in detail with reference to FIG. 7. The micro-mechanical electrostatic actuator 200' has a movable electrode 202' having an opening 202a' and a drive electrode 203' (203A', 203B', 203XA 'and 203XB'). These electrodes have the same structure as that of the above-described third embodiment. Therefore, explanations for these electrodes will be omitted.

In this embodiment, the supporting part 201' that supports the movable electrode 202' has a fixed part 201a' and a supporting beam member 201b', which is the same as the third embodiment. However, a pair of supporting parts 201' is provided on either side of the movable electrode 202', which is different from the third embodiment. These supporting parts 202' have the same structures as those of the second embodiment. In other words, a pair of the supporting beam members 201b' is respectively coupled to diagonal sides of the movable electrode 202' with a certain space therebetween. These supporting beam members 201b' are separately fixed on the substrate with the respective fixed parts 201a'.

When the supporting part 201' is configured in the above-described way, the movable electrode 202' can be strongly held in the same way as the second embodiment. Accordingly, the movable electrode 202' can be supported in more stable posture and a moving direction of the movable electrode 202' (the horizontal direction in FIG. 7) can be more precisely set. In this embodiment, two supporting parts 201' are provided on both sides of the movable electrode 202'. As long as the supporting part 201' is provided in the plural number, for example, three supporting parts 201' may be formed on both sides of the movable electrode 202'.

### (Fifth Embodiment)

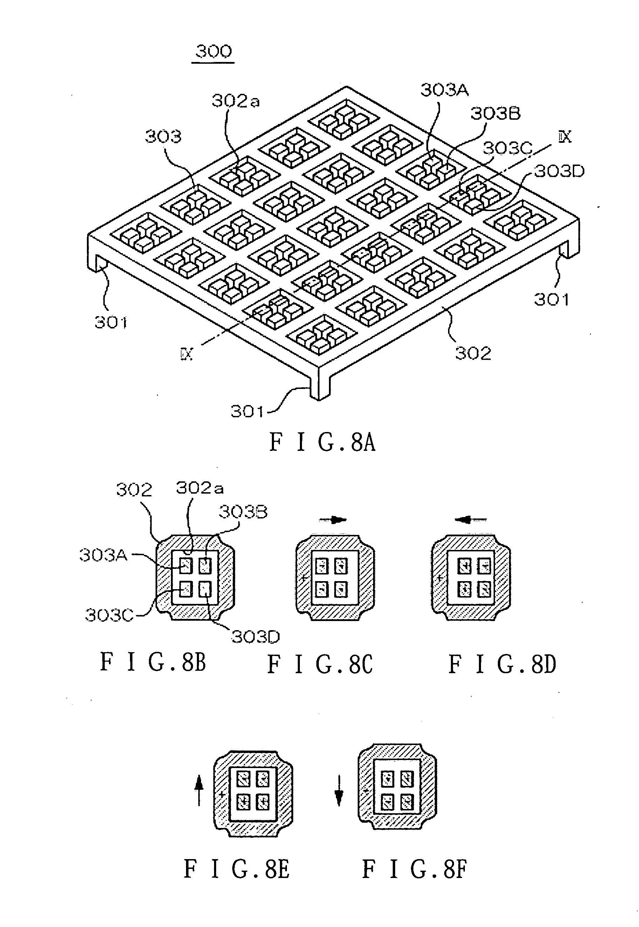

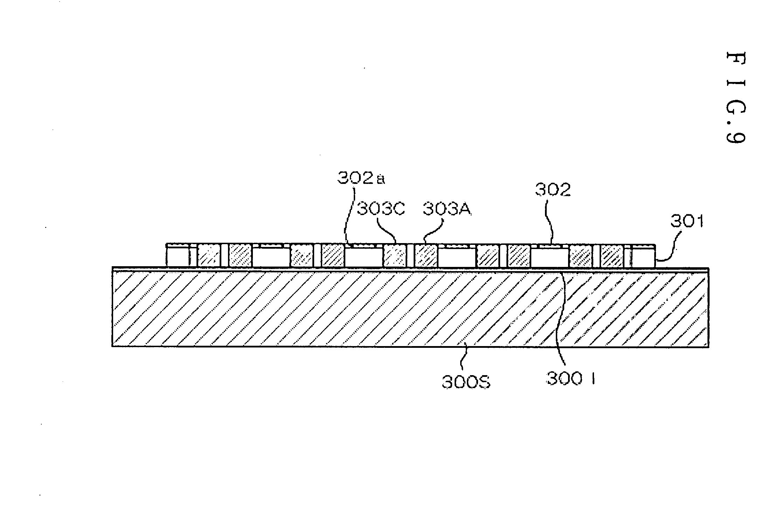

A micro-mechanical electrostatic actuator 300 of a fifth embodiment according to the present invention will be described in detail with reference to FIG. 8. As shown in FIG. 8a and FIG. 9, the micro-mechanical electrostatic actuator 300 has a supporting part 301, a movable electrode 302 and a drive electrode 303 formed on the same type base (a substrate 300S and an insulating layer 300I) as the one of the first embodiment.

The supporting part 301 of this embodiment has a columnar structure standing up on the base face and the movable electrode 302 can be moved in a horizontal direction by bending the columnar structure. To be more specific, an upper end of the supporting part 301 is coupled to a corner of the movable electrode 302. The supporting part 301 is provided at each corner of the movable electrode 302 and formed such that the movable electrode 302 is movable in any direction of the plane.

In this embodiment, an opening 302a is formed in the movable electrode 302, the drive electrode 303 is provided in the opening 302a, the opening 302a is provided in the plural number and they are placed in the movable electrode 302 so as to uniformly disperse throughout the movable electrode 302 (they are vertically and horizontally arranged in a matrix), which are same as the above-described embodiments. In addition, four drive electrodes 303 or a first drive electrode 303A, a second drive electrode 303B, a third drive electrode 303C and a fourth drive electrode 303D are provided inside the opening 302a as shown in FIG. 8b in this embodiment. Each drive electrode 303 is placed on both sides of (around) a center of the opening 302a. More particularly, each of the four drive electrodes 303 is provided in the opening 302a which has a rectangular shape so as to face two adjacent surfaces of the four interior surfaces of the opening edges in the movable electrode 302.

In this embodiment, the movable electrode 302 moves in the way as shown in FIG. 8c when the attractive electrostatic force works between the movable electrode 302 and the drive electrode 303A and between the movable electrode 302 and the drive electrode 303C and the repulsive electrostatic force works between the movable electrode 302 and the drive electrode 303B and between the movable electrode 302 and the drive electrode 303D. On the contrary, when the repulsive electrostatic force works between the movable electrode 302 and the drive electrode 203A and between the movable electrode 302 and the drive electrode 203C and the attractive electrostatic force works between the movable electrode 302 and the drive electrode 303B and between the movable electrode 302 and the drive electrode 303D, the movable electrode 302 moves in the way as shown in FIG. 8d. In other words, the movable electrode 302 moves in the right-and-left direction shown in the figure in the above-described case.

Furthermore, the movable electrode 302 moves in the way as shown in FIG. 8e when the attractive electrostatic force works between the movable electrode 302 and the drive electrode 303A and between the movable electrode 302 and the drive electrode 303B and the repulsive electrostatic force works between the movable electrode 302 and the drive electrode 303C and between the movable electrode 302 and the drive electrode 303D. On the contrary, when the repulsive electrostatic force works between the movable electrode 302 and the drive electrode 203A and between the movable electrode 302 and the drive electrode 203B and the attractive electrostatic force works between the movable electrode 302 and the drive electrode 303C and between the movable electrode 302 and the drive electrode 303D, the movable electrode 302 moves in the way as shown in FIG. 8f. In other words, the movable electrode 302 moves in the vertical direction as shown in the figure in the above-described case.

In this embodiment, the movable electrode 302 can be moved in the four directions (in other words, two directions of the horizontal direction and the vertical direction) by driving the four drive electrode. As described above, when a plurality of the drive electrodes are accordingly provided in the opening 302a of the movable electrode 302, the moving direction of the movable electrode 302 can be changed depending on an electric potential condition of these drive electrodes. Furthermore, when the movable electrode 302 is formed so as to be movable in a plural direction, degrees of freedom in move patterns of the movable electrode 302 is increased and it makes it possible to move the movable electrode 302 more intricately or oscillate the movable electrode 302 in different vibration modes. In this embodiment, the number of the drive electrode provided in the opening 302a may be one or two. Furthermore, other electrodes may be provided outside the movable electrode 302. In addition to the patterns shown in FIG. 8c through 8f, for example, the movable electrode 302 can be moved in a direction other than the above-mentioned four directions (the oblique direction in the figure) by giving an electric potential to the first drive electrode 303A, the second drive electrode 303B and the third drive electrode 303C and giving an electric potential, which has an opposite polarity with reference to the electric potential of the movable electrode 302, to the fourth drive electrode 303D.

In this embodiment, the opening 302a has the rectangular shape in plan view. The first drive electrode 303A and the second drive electrode 303B are placed closed to the upper edge of the opening 302a and the first drive electrode 303A and the third drive electrode 303C are placed closed to the left edge of the opening 302a as shown in the figure. The third drive electrode 303C and the fourth drive electrode 303D are placed closed to the lower edge of the opening 302a and the fourth drive electrode 303D and the second drive electrode 303B are placed closed to the right edge of the opening 302a as shown in the figure. In this way, the plurality of the drive electrodes is provided in the different directions in the opening 302a. This makes it possible to move the movable electrode 302 in more than two different directions according to configuration of the electric potentials given to the drive electrodes. In this case, the configuration of the electric potentials includes a case where a specific electric potential is not given to a part of the drive electrodes and a case where an electric potential which is substantially the same as that of the movable electrode 302 is given to a part of the drive electrodes. The embodiment also includes a configuration of the drive electrodes. Each of the drive electrodes 303A through 303D is placed so as to be departed from the two adjacent inner edges by about same distance. In either case, it is possible to move the movable electrodes in more than two different directions by providing at least two movable electrodes independently.

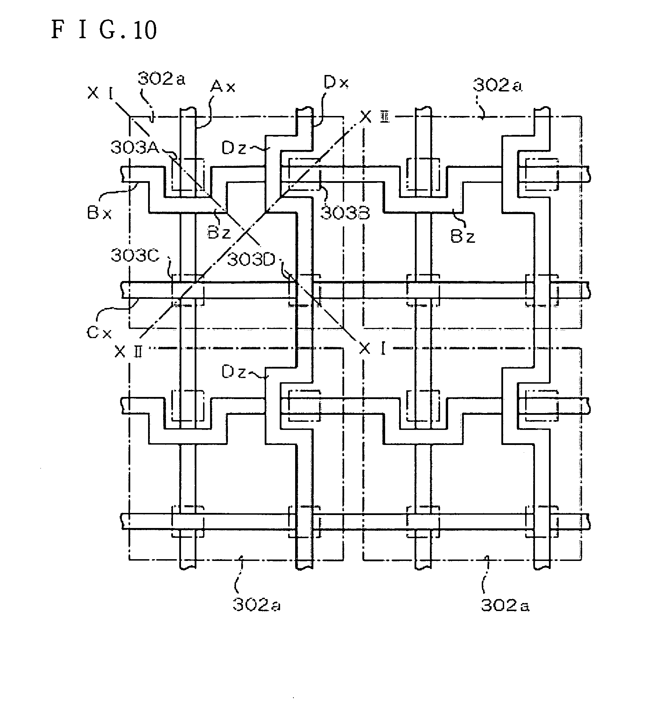

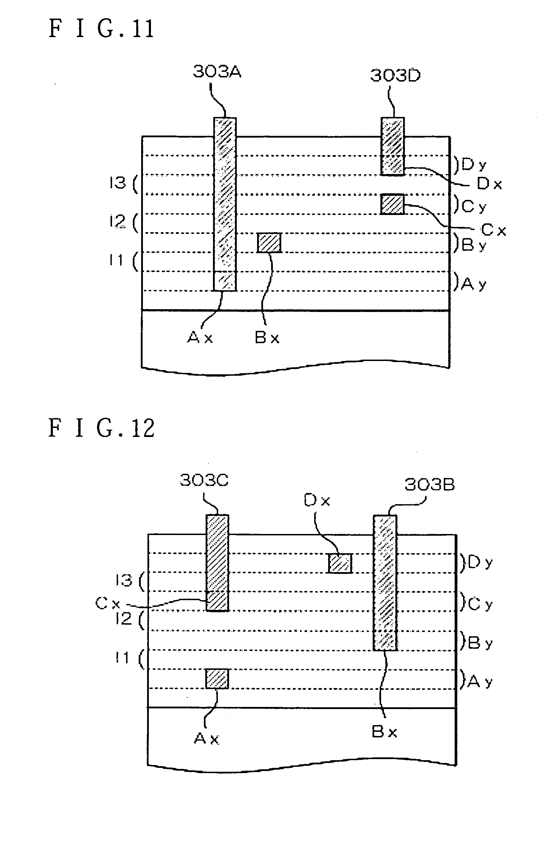

FIG. 10 is a plan layout view of wirings coupled to the above-described drive electrodes 303A through 303D in this embodiment. FIG. 11 is a partial sectional view along the line XI-XI in FIG. 10 showing a sectional structure and FIG. 12 is a partial sectional view along the line XII-XII in FIG. 10 showing a sectional structure. In this embodiment, the above-described drive electrodes 303A through 303D are separately formed in the opening 302a. In other words, a different electric potential can be respectively given to the each of the drive electrodes 303A through 303D. For this reason, independent wirings Ax, Bx, Cx and Dx are electrically coupled respectively to the corresponding drive electrodes 303A through 303D. Here, the wirings Ax through Dx are isolated each other. More specifically, insulating layers I1, I2 and I3 are respectively interposed among a layer Ay in which the wiring Ax is formed, a layer By in which the wiring Bx is formed, a layer Cy in which the wiring Cx is formed and a layer Dy in which the wiring Dx is formed as shown in FIG. 11 and FIG. 12. In this way, each ot the wirings Ax through Dx is isolated.

Each of the wirings Ax through Dx is coupled to the every corresponding drive electrodes 303A through 303D in all the openings 302a provided in the movable electrode 302. In the example shown in the figures, each of the wirings Ax Bx, Cx and Dx is formed in a different layer and each of the above-described drive electrodes 303A through 303D is electrically coupled to the corresponding wiring formed in the respective layer and extends the upper direction so as to project in the opening 302a of the movable electrode 302. As shown in FIG. 10, the wirings Bx and Dx in the upper layers have avoidance parts Bz and Dz (U-shaped part in the figure) in order to avoid the first drive electrode 303A and the third drive electrode 303C which are electrically coupled to the wirings in the lower layers.

The above-described wiring structure can be formed by forming conducting layers with the insulating layers I1 through I3 therebetween and patterning the conducting layers. The conducting layers are made of semiconductor such as polysilicon or metal such as aluminum and formed in a surface part of the substrate 300. This manufacturing process can be carried out by the film forming process such as sputtering and CVD and the patterning process such as photolithography. The above-described wirings Ax through Dx are respectively electrically coupled to unshown voltage supply means so as to be provided with a predetermined voltage. For example, each of the wirings Ax through Dx may be electrically coupled to a connecting pad formed on the substrate 300S and the voltage may be supplied to the wiring through the pad. Alternatively, the wirings may be directly coupled to the voltage supply means formed in the substrate 300S.

### (Sixth Embodiment)

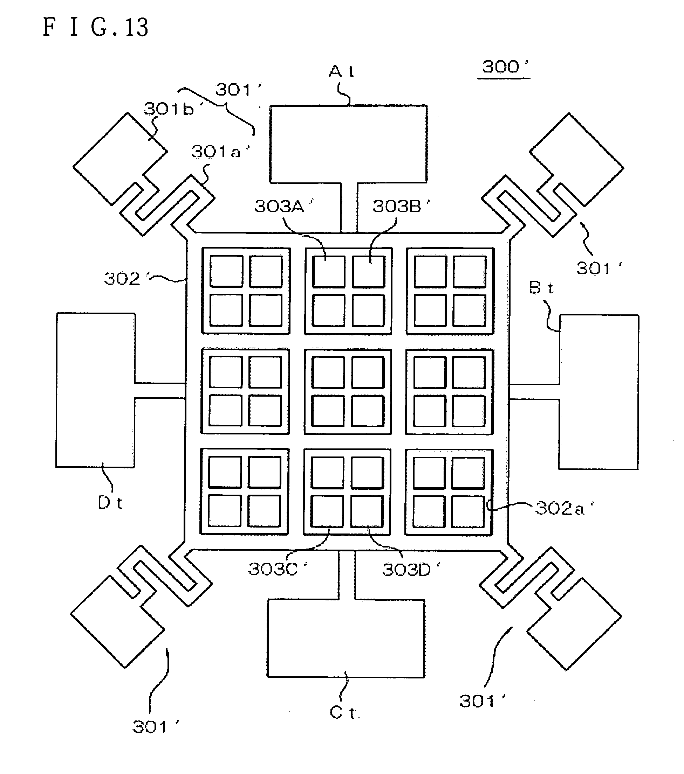

Next, a sixth embodiment according to the present invention will be described with reference to FIG. 13. FIG. 13 is a plan view schematically showing a planar structure of a micro-mechanical electrostatic actuator 300' of the sixth embodiment. In this embodiment, a movable electrode 302' is formed so as to be movable in a plane direction on the same type base as the one in the above-described fifth embodiment with a supporting part 301' interposed therebetween. In the same way as described above, an opening 302a' is provided in the plural number and they are placed in a movable electrode 302' so as to uniformly disperse throughout the movable electrode 302'. Drive electrodes 303A', 303B', 303C' and 303D' are formed in each opening 302a'.

In this embodiment, a supporting part 301' is formed such that the movable electrode 302' is movable in any direction of the plane, which is the same feature as the above-described fifth embodiment. However, in this embodiment, the supporting part 301' has a fixed part 301a' that is fixed on the substrate and a supporting beam member 301b' that extends between the fixed part 301a' and the movable electrode 302' in the plane direction, which is different from the fifth embodiment. To be more specific, the supporting beam member 301b' and the movable electrode 302' are formed on the substrate so as to have a space therebetween. The movable electrode 302' is supported so as to be movable in the plane direction by bending the supporting beam member 301b'. In the example shown in the figure, a plurality of supporting beam members 301b' is coupled to the outer edge of the movable electrode 302'. The supporting beam members 301b' extends outward and is coupled to the fixed part 301a'.
Here, the movable electrode 302' is formed to have a rectangular shape in plan view and the supporting part 301' is coupled to each corner of the movable electrode 302'. The supporting beam members 301b' has an inflected shape so as to deform easily.

Like the above-described fifth embodiment, wirings coupled to the drive electrodes 303A' through 303D' are formed in the surface part of the substrate in this embodiment. These wirings are respectively coupled to connection pads At, Bt, Ct and Dt formed on the substrate. These connection pads At through Dt are coupled to a power supply circuit that is not shown in the figure through not shown coupling member (a conductive wiring and the like).

In this embodiment, basically the actuator can move in the same way as the above-described fifth embodiment. However, the movable electrode 302' of this embodiment can be more easily moved in the plane direction compared to the fifth embodiment since the supporting part 301' has the supporting beam member 301b' that extends in the plane direction. Therefore, a large amount of displacement can be obtained with a smaller drive voltage.

### (Seventh Embodiment)

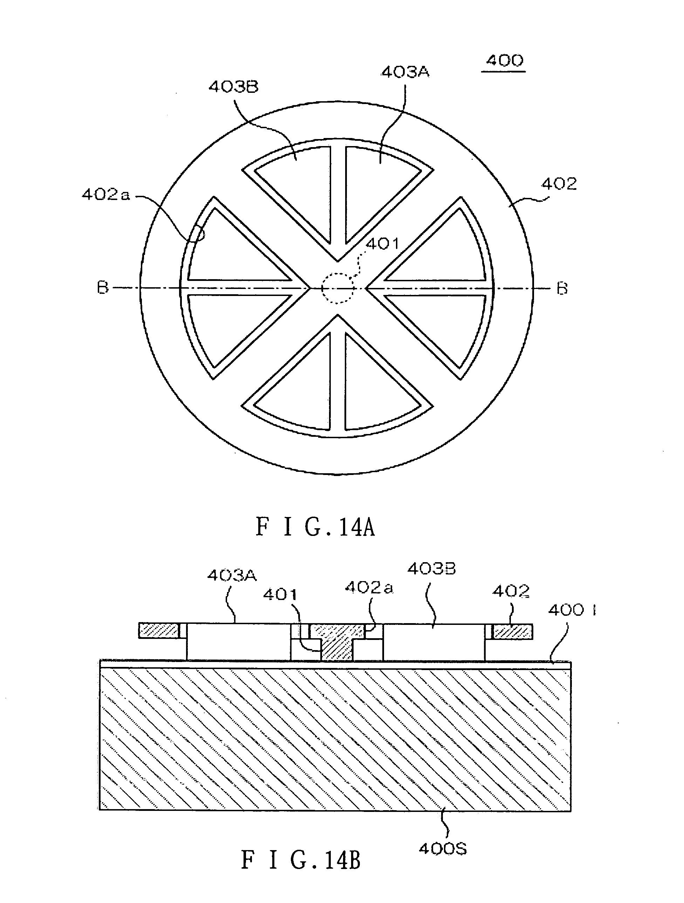

Next, a seventh embodiment according to the present invention will be described with reference to FIG. 14. In this embodiment, a movable electrode 402 is formed so as to be rotatable in a plane on the same type base (a substrate 400S and an insulating layer 400I) as the one described in the above embodiments with a supporting part 401 interposed therebetween. Drive electrodes 403A and 403B are formed in each opening 402a provided in the movable electrode 402. As far as a respect that the movable electrode 402 is formed to be movable in the plane direction, this embodiment is the same as the above-described embodiments. However, the supporting part 401 of this embodiment is formed to be torsionally deformable while the movable electrodes of the above-described embodiments are formed to be movable in the plane. In this way, the movable electrode 402 is formed to be rotatable in the plane and this feature is different from the other embodiments described above.

In this embodiment, the drive electrodes 403A and 4038 are placed in the opening 402a of the movable electrode 402. These drive electrodes 403A and 403B are arranged in a rotation direction which is the direction in which the movable electrode 402 moves. These drive electrodes are placed to be close to an inner edge which is at the opposite side to the rotation direction. In other words, the drive electrodes 403A is placed in a position where is slanted toward the clockwise direction in the figure from the center angle of the opening 402a and the drive electrodes 403B is placed in a position where is slanted toward the counterclockwise direction in the figure from the center angle of the opening 402a. Accordingly, the movable electrode 402 can be rotated by applying voltage to the movable electrode 402 and at least one of the drive electrodes 403A and 403B.

### (Operation and Effect)

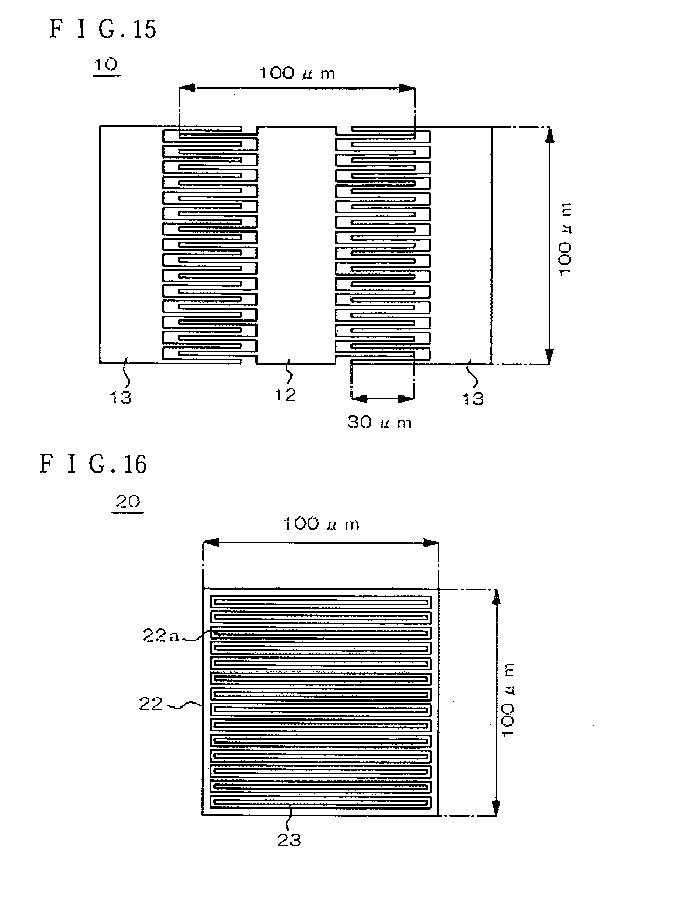

Next, the operation and effect of the present invention will be described in contradistinction to those of a conventional structure. FIG. 15 is a plan view of a comparative example, which is a model of the conventional electrostatic actuator having the comb-shaped structure, showing its plan structure. FIG. 16 is a plan view of a practical example, which is a model of the electrostatic actuator of the present invention, showing its plan structure. In the structures of the both examples, the minimum rule of patterning is 1 µm. The actuator of the comparative example occupies an area of 100 µm × 150 µm and the actuator of the practical example occupies an area of 100 µm × 100 µm.

In a comparative example 10 shown in FIG. 15, a pair of drive electrodes 13 and 13 is placed on the both sides of a movable electrode 12 provided in the center. The movable electrode 12 and the drive electrode 13 respectively have the comb-shaped structure. These comb-shaped structures oppose each other such that the teeth of the one comb mesh with the teeth of the other comb. A moving direction of the movable electrode 12 is a direction parallel to the line connecting the drive electrodes 13 provided on the both sides of the movable electrode 12 (the horizontal direction in the figure).

Here, when an overlap length of the opposed comb structures in the moving direction is 30 µm in an initial state (a state in which the electrostatic force is not produced), a width of the tooth of the comb structure is 1 µm, a length of the movable electrode 12 in the moving direction is 100 µm, a width of the movable electrode 12 and the drive electrode 13 in a direction perpendicular to the moving direction is 100 µm and a thickness of the movable electrode 12 is 10 µm, the area where the movable electrode 12 opposes the pair of the drive electrodes 13 is calculated to be 28,800 µm².

Meanwhile, in a practical example 20 shown in the FIG. 16, a drive electrode 23 is placed in an opening 22a of a movable electrode 22. The opening 22a and the drive electrode 23 are provided in the plural number and arranged in the vertical direction in the figure. The opening 22a and the drive electrode 23 have a shape which extends in a direction perpendicular to the direction in which the opening 22a and the drive electrode 23 are arranged. In this case, a moving direction of the movable electrode 22 is the arranged direction of the opening 22a and the drive electrode 23 (the vertical direction in the figure).

Here, when a width of the drive electrode 23 in the arranged direction is 1 µm, an outside dimension of the movable electrode 22 is 100 µm × 100 µm and a thickness of the movable electrode 22 is 10 µm, the area where the movable electrode 22 opposes the drive electrodes 13 is calculated to be 46,080 µm².

As described above, in the practical example 20, although the occupied area is smaller than that of the comparative example 10, the area where the electrodes oppose exceeds 1.5 times of that of the comparative example 10. This analysis shows that the present invention can make the occupied area smaller compared to the conventional structure and the larger drive force can be obtained with the present invention. Furthermore, when the drive force is same as that of the conventional structure, the driving voltage can be lowered with the present invention since a drive force per unit occupied area can be increased in the way described above.

Moreover, though it is obvious when FIG. 15 is compared with FIG. 16, the unnecessary area which does not contribute to generate the drive force is close to none in the practical example while the unnecessary area is large in the comparative example. This is possible because the movable electrode 22 has the frame shape and certain rigidity can be maintained even when the needless area is decreased. Furthermore, when the actuator is manufactured by using the sacrifice layer, it might have some trouble to release the unnecessary area of the movable electrode 12 from the base in the comparative example. On the contrary, the practical example has the openings 22a (that are uniformly dispersed) throughout the movable electrode 22 and an etching effect can be evenly spread to the sacrifice layer through each opening 22a. Therefore, the movable electrode 22 can be released from the base without any difficulty.

### (Embodiments of the Voltage application means and the Signal output means)

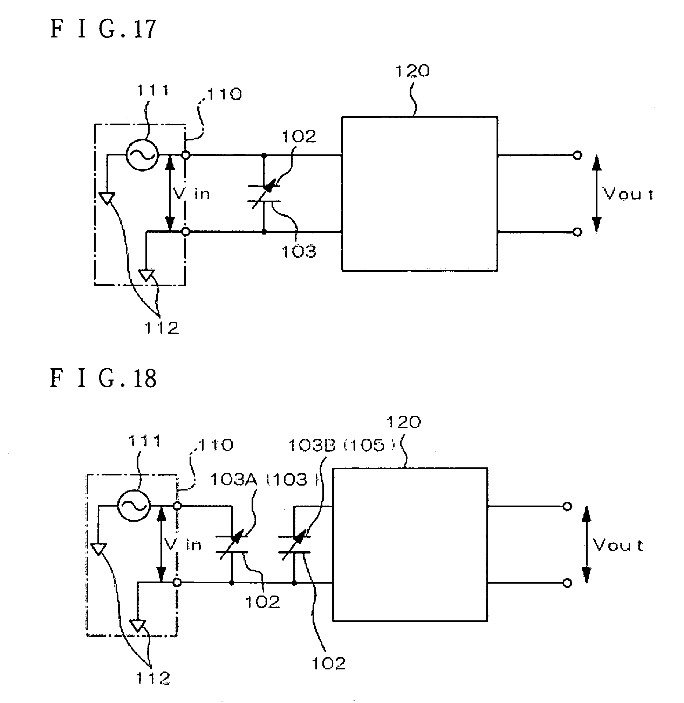

Next, a structure and embodiments of a voltage application means and a signal output means that are applicable to the micro-mechanical electrostatic actuator in the above-described embodiments will be described with reference to FIG.17 and FIG. 18. The voltage application means and the signal output means of the present invention is functional and applicable to any embodiments described above. Here, a case where the voltage application means and the signal output means are applied to the micro-mechanical electrostatic actuator 100 in the first embodiment will be explained.

FIG. 17 is a configuration block diagram showing a schematic configuration when a voltage application means 110 and a signal output means 120 are applied to the electrostatic actuator 100. Here, the voltage application means 110 includes a power supply circuit 111 and a reference potential 112 such as a ground electric potential. The power supply circuit 111 generates a time varying electric potential such as an alternating-current potential and a pulse potential. A drive potential produced by the power supply circuit 111 and the reference potential 112 are respectively provide to the movable electrode 102 and the drive electrode 103 (at least one of the drive electrodes 103A and 103B shown in FIG.1 and FIG. 2). Accordingly, a drive voltage Vin which is a difference between the drive potential and the reference potential is applied between these electrodes. The drive potential produced by the power supply circuit 111 may be applied to either the movable electrode 102 or the drive electrode 103 as long as the drive voltage Vin is applied between the movable electrode 102 and the drive electrode 103. In this case, the movable electrode 102 is moved by an electrostatic force produced by the drive voltage Vin and a distance between the movable electrode 102 or the drive electrode 103 changes. Therefore, a value of a capacitance composed of these electrodes also changes with time.

Meanwhile, the signal output means 120 is coupled to the movable electrode 102 and the drive electrode 103 and outputs an output signal Vout. The output signal Vout depends on a capacitance change caused by a displacement of the movable electrode of the capacitance composed of these electrodes. The signal output means 120 can be composed, for example, of an oscillation circuit (for example, Wien bridge oscillation circuit) that has an oscillating frequency that changes according to the capacitance change of the above-described capacitance. In this case, the output signal Vout becomes a periodic signal having a frequency that corresponds to the above-described capacitance. Any circuit including various types of bridge circuits may be used as long as they can be used as a detector circuit of the capacitance.

FIG. 18 is a configuration block diagram showing another example when a voltage application means and a signal output means are applied. Here, the voltage application means 110 and the signal output means 120 themselves are the same as those shown in FIG. 17. In this application example, the drive voltage Vin is applied between the movable electrode 102 and the first drive electrode 103A while the movable electrode 102 and the second drive electrode 103B are coupled to the signal output means 120. More specifically, the drive potential of the power supply circuit 111 is supplied to the first drive electrode 103A and the reference potential 112 is supplied to the movable electrode 102. The movable electrode 102 and the second drive electrode 103B to which the drive potential is not supplied are coupled with the signal output means 120. In this case, the second drive electrode 103B works as a sensing electrode.

In this way, the output signal Vout that corresponds to the displacement of the movable electrode 102 can be obtained without being affected by the drive voltage Vin supplied from the voltage application means 110. Particularly, when the potential applied to the movable electrode 102 which is commonly coupled to the voltage application means 110 and the signal output means 120 becomes the reference potential (stationary potential), having the affect of the drive voltage Vin to the output signal Vout can be completely prevented.

The potential from the voltage application means 110 may be supplied to the drive electrode 103 (one of the first drive electrode 103A or the second drive electrode 103B) instead of the above-mentioned first drive electrode 103A and a sensing electrode 105 other than the drive electrode 103 may be further provided as shown by the reference numerals in parentheses in FIG. 18. It is possible to use the sensing electrode 105 as a substitute for the second drive electrode 103B coupled to the signal output means 120. In this case, the sensing electrode 105 may be provided in the opening in the same way as the above-described drive electrode 103 as long as the sensing electrode 105 is provided such that the capacitance between the sensing electrode 105 and the movable electrode 102 changes according to the displacement of the movable electrode 102. Furthermore, the sensing electrode 105 may be provided so as to oppose the outer edge of the movable electrode 102. The sensing electrode 105 may be provided below the movable electrode 102 (for example, on the substrate) or so as to face the upper face of the movable electrode 102.

The electrostatic actuator of the present invention is not limited to the above-described embodiment shown in the figures but applied to various kinds of modifications within the scope and spirit of the present invention. For example, though the drive structure of the electrostatic actuator is mainly described in the embodiments above, various kinds of devices can be composed depending on types of the drive voltage applied to the electrostatic actuator. For example, besides a drive force generating actuator that sequentially provides the drive force by the displacement of the movable electrode, a resonator and a filter circuit can be composed because the movable electrode oscillates with the application of an alternating voltage or a pulse voltage. It is also possible to compose a digital mirror device or an ink discharging head of an ink-jet printer.

### [List of Reference Numerals]

100, 200, 300: ELECTROSTATIC ACTUATOR
101, 201, 301: SUPPORTING PART
101a, 201a: FIXED PART
101b, 201b: SUPPORTING BEAM MEMBER
102, 202, 302: MOVABLE ELECTRODE
102a, 202a, 302a: OPENING
103, 103A, 103B, 203, 203A, 203B, 203XA, 203XB, 303, 303A,
303B, 303C, 303D: DRIVE ELECTRODE
110: VOLTAGE APPLICATION MEANS
120: SIGNAL OUTPUT MEANS

## Claims

1. A micro-mechanical electrostatic actuator, comprising:
a substrate;
a movable electrode supported by the substrate so as to be movable in a plane along a surface of the substrate and having a frame-shape and a opening that penetrates in a vertical direction perpendicular to the plane;
a drive electrode provided in the opening of the substrate;
a voltage supply applying a voltage between the movable electrode and the drive electrode; and
a signal output providing an output signal according to displacement of the movable electrode.

2. The micro-mechanical electrostatic actuator according to Claim 1, wherein the drive electrode is provided in the plural number and independently placed in the opening.

3. The micro-mechanical electrostatic actuator according to Claim 1, further comprising:
another drive electrode placed outside the movable electrode so as to oppose an outer edge of the movable electrode.

4. The micro-mechanical electrostatic actuator according to any of Claims 1 to 3, wherein the opening includes a plurality of openings arranged in the movable electrode.

5. The micro-mechanical electrostatic actuator according to Claim 4, wherein the plurality of the openings is vertically and horizontally arranged in a matrix in the movable electrode.

6. The micro-mechanical electrostatic actuator according to any of Claims 1 to 3, wherein the movable electrode and the drive electrode have a comb-shaped structure whose opposing faces mesh each other.

7. A micro-mechanical electrostatic actuator, comprising:
a substrate;
a movable electrode supported by the substrate so as to be movable in a plane along a surface of the substrate and having a frame-shape and a opening that penetrates in a vertical direction perpendicular to the plane; and
a plural of drive electrodes independently arranged in the opening of the substrate such that a moving direction of the movable electrode is changeable according to electric potentials given to the drive electrodes.

8. The micro-mechanical electrostatic actuator according to Claim 7, wherein the opening includes a plurality of openings and arranged in the movable electrode.

9. The micro-mechanical electrostatic actuator according to Claim 8, wherein the plurality of the openings is vertically and horizontally arranged in a matrix in the movable electrode.

10. A micro-mechanical electrostatic actuator, comprising:
a substrate;
a movable electrode supported by the substrate so as to be movable in a plane along a surface of the substrate and having a frame-shape and a plurality of openings arranged along the plane so as to be evenly dispersed; and
a drive electrode provided in each opening.

11. The micro-mechanical electrostatic actuator according to Claim 10, wherein the plurality of the openings is vertically and horizontally arranged in a matrix in the movable electrode.

12. The micro-mechanical electrostatic actuator according to any of Claims 10 and 11, wherein the drive electrode is provided in the plural number and independently placed in the opening.
